(19) Europäisches Patentamt
European Patent Office
Office européen des brevets

(11) **EP 4 432 554 B1**

(12) **EUROPÄISCHE PATENTSCHRIFT**

(45) Veröffentlichungstag und Bekanntmachung des Hinweises auf die Patenterteilung:
**29.01.2025   Patentblatt 2025/05**

(21) Anmeldenummer: **23162462.8**

(22) Anmeldetag: **16.03.2023**

(51) Internationale Patentklassifikation (IPC):
**H02P 29/032** *(2016.01)*    **H02P 29/60** *(2016.01)*
**H02H 7/085** *(2006.01)*    **B24B 23/02** *(2006.01)*

(52) Gemeinsame Patentklassifikation (CPC):
**H02P 29/032; B24B 23/02; H02H 7/0858;
H02P 29/60;** H02P 2205/03

(54) **MOTORSTEUERUNG FÜR EIN ELEKTROWERKZEUG**

MOTOR CONTROL FOR A POWER TOOL

COMMANDE DE MOTEUR POUR OUTIL ÉLECTRIQUE

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Veröffentlichungstag der Anmeldung:
**18.09.2024   Patentblatt 2024/38**

(73) Patentinhaber: **C. & E. Fein GmbH
73529 Schwäbisch-Gmünd-Bargau (DE)**

(72) Erfinder:
• **Mayer, Bernd
73479 Ellwangen (DE)**

• **Mayer, Bernd
73466 Lauchheim (DE)**
• **Schumacher, Eberhard
70599 Stuttgart, Birkach (DE)**

(74) Vertreter: **Wallinger, Michael
Wallinger Ricker Schlotter Tostmann
Patent- und Rechtsanwälte Partnerschaft mbB
Zweibrückenstrasse 5-7
80331 München (DE)**

(56) Entgegenhaltungen:
EP-A1- 3 849 076        DE-A1- 102007 014 346
DE-A1- 102016 203 728        DE-A1- 102018 123 661
JP-A- 2002 018 745

**Beschreibung**

Die Erfindung betrifft eine Motorsteuerung für ein Elektrowerkzeug, insbesondere einen EC-Winkelschleifer, das Elektrowerkzeug mit dieser Motorsteuerung, und entsprechende Verfahren zur Steuerung.

Je nach Anwendung werden Elektrowerkzeuge, insbesondere Winkelschleifer, längere Zeit im Überlastbereich betrieben. Als Überlastbereich gilt eine Leistungsaufnahme, welche der Winkelschleifer nicht dauerhaft thermisch verkraftet. Es gibt also per Definition eine oder mehrere Komponenten, welche im Überlastbereich die thermische Grenze bestimmen. Häufig sind dies elektronische Bauteile, Akkuzellen oder auch ein gekapselter Motor.

Nach Stand der Technik wird zur Einhaltung der thermischen Grenzen entweder die Temperatur sensorisch an der jeweiligen Komponente erfasst oder sie wird mittels einer anderweitigen Temperaturreferenz und einer gleichzeitigen Verlustabschätzung (meist aufgrund des Motorstromes per Software) berechnet. Überschreitet die ermittelte Temperatur einen festgelegten Grenzwert, wird die Maschine wegen Übertemperatur abgeschaltet. Häufig wird der Anwender im Nachgang durch eine optische Anzeige über diesen Abschaltgrund informiert, um die Verwechslung mit einer Fehlfunktion zu verhindern.

Zum Stand der Technik gehören v.a. im Bereich bürstenloser Antriebe drehzahlgeregelte Maschinen, welche für viele Anwendungen den Vorteil eines gleichmäßigen Arbeitsergebnisses bieten. Der Nachteil dieser Drehzahlregelung ist jedoch, dass dem Anwender die erkennbare Rückmeldung über die Leistungsaufnahme der Maschine fehlt. Leider sind die Arbeitsprozesse bei Winkelschleifern so vielseitig, dass vom Arbeitsprozess selbst kaum auf die Leistungsaufnahme geschlossen werden kann. Eine Abschaltung wegen Übertemperatur erfährt der Anwender also meist unvermittelt und während er sich auf die Arbeit am Werkstück konzentriert. Dann muss die Arbeit in der Regel für eine Abkühlpause der Maschine unterbrochen werden.

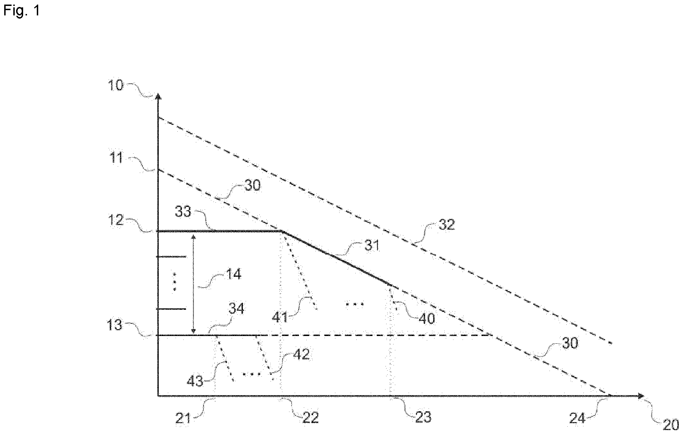

Bei der Antriebsauslegung wird nach dem Stand der Technik versucht, den Überlastbereich des Antriebes auf die natürliche Motorkennlinie 30 (Fig. 1: Drehzahl fällt ab, da keine Regelreserve mehr vorhanden ist) zu legen. Jedoch sind leistungsfähige bürstenlose Motoren einerseits sehr drehzahlsteif und andererseits kann diese Auslegung meist nur für die höchste Drehzahlstufe genutzt werden. Die niedrigeren Drehzahlstufen werden ebenfalls elektronisch geregelt und erreichen erst weit im Überlastbereich die natürliche Kennlinie des Motors. Ein Überlastschutz mittels fest vorgegebener Strombegrenzung zählt zum Stand der Technik.

Sind die thermisch bestimmenden Komponenten auf unkritischer Betriebstemperatur, wäre es bevorzugt, wenn die Maschine auch Überlastsituationen ohne Leistungsbegrenzung ermöglichte. Zudem spielen neben dem Laststrom weitere Parameter wie Verschmutzungsgrad oder die tatsächliche Quellspannung in die Erwärmung der Maschine hinein.

Die EP 3 849 076 A1 offenbart ein System und ein Verfahren zur Regelung einer Leistung eines Elektrowerkzeugs. Die Leistung bzw. die Leistungsbegrenzung eines Elektrowerkzeugs wird in Abhängigkeit von mindestens einem Temperaturwert eingestellt. Der Temperaturwert wird dabei an einer Komponente des Leistungspfades des Elektrowerkzeugs gemessen. Dabei handelt es sich um den Motor und/oder die Leistungselektronik des Elektrowerkzeugs.

Die DE 10 2016 203 728 A1 offenbart ein handgehaltenes elektrisch angetriebenes Haushaltsgerät und ein zugehöriges Verfahren, wobei das handgehaltene elektrisch angetriebene Haushaltsgerät einen elektrischen Motor zum Antreiben des Haushaltsgeräts; einen Temperatursensor zum Messen einer Temperatur des Haushaltsgeräts; und eine Steuereinrichtung umfasst, wobei die Steuereinrichtung eingerichtet ist: zum Bestimmen, ob die Temperatur oder ein aus der gemessenen Temperatur bestimmter Wert einen Schwellwert überschreitet und, wenn die Temperatur oder der aus der Temperatur bestimmte Wert den Schwellwert überschreitet, eingerichtet ist, einen Maximalwert einer an den Motor auszugebenden Leistung auf einen Wert, welcher kleiner ist als ein vorheriger Maximalwert, zu setzen.

Die JP 2002 018745 A offenbart ein Elektrowerkzeug mit einem Ablenkblech zur Steuerung eines Luftstroms für die Motorkühlluft eines Rotors. Ein Sensor zur Messung der Temperatur der Motorkühlluft ist an dem Ablenkblech angebracht und steuert den Laststrom des Elektromotors entsprechend der vom Sensor erfassten Temperatur der Motorkühlluft.

Die DE 10 2018 123 661 A1 offenbart als nächstliegender Stand der Technik eine elektrische Schleifmaschine, die einen Hauptkörper, eine Steuereinheit und eine Stromregelschaltung umfasst, wobei der Hauptkörper einen bürstenlosen Motor aufweist, bei dem es sich um einen genuteten bürstenlosen Gleichstrom-Motor handelt, wobei die Stromregelschaltung ferner ein Leistungsmessmodul, ein Nennleistungsbegrenzungsmodul, ein intelligentes Temperaturreglungs- und Schutzmodul und ein Drehzahlregelmodul umfasst, sodass der bürstenlose Motor entsprechend der Laständerung und nach dem intelligenten Temperaturreglungs- und Schutzmechanismus seine Drehzahl regeln und stets innerhalb der durch das Nennleistungsbegrenzungsmodul gesetzten Leistung arbeiten kann.

Die DE 10 2007 014 346 A1 offenbart ein Gerät mit elektromotorischem Antrieb, das einen Elektromotor und eine elektronische Baugruppe zur Ansteuerung des Elektromotors umfasst, wobei die elektronische Baugruppe mindestens einen Temperatursensor aufweist, der einen von der Temperatur eines Leistungshalbleiterbauelementes der elektronischen Baugruppe abhängigen Temperaturwert ermitteln kann, und die elektronische Baugruppe Mittel umfasst, um in Abhängigkeit von dem durch den Temperatursensor ermittelten Temperaturwert eine Leistungsreduzierung vornehmen zu können.

Die Aufgabe der Erfindung besteht darin, für alle temperaturbedingt veränderlichen Betriebszustände die Einsatzfähigkeit des Elektrowerkzeugs zu erhalten.

Die Erfindung löst diese Aufgabe durch die Motorsteuerung für ein Elektrowerkzeug gemäß Anspruch 1. Bevorzugte Ausgestaltungen der Erfindung sind Gegenstände der abhängigen Ansprüche und ergeben sich aus der Beschreibung der Erfindung und aus den Figuren.

Eine erfindungsgemäße Motorsteuerung für einen, insbesondere bürstenlosen, Elektromotor eines Elektrowerkzeugs, insbesondere eines Hand-Elektrowerkzeug, weist auf:

> eine Temperatursensoreinrichtung, mittels der mindestens ein, vom Betrieb des Elektromotors beeinflusster, Temperaturwert einer Elektrowerkzeugkomponente bestimmbar ist,
> eine Leistungsmesseinrichtung, die zur Erfassung eines die Leistungsaufnahme des Elektromotors charakterisierenden Leistungsaufnahmewerts (P; I, U) eingerichtet ist,
> eine elektronische Steuereinrichtung, die eine Leistungsbegrenzungseinrichtung aufweist, die zur Begrenzung der Leistungsaufnahme des Elektromotors dazu eingerichtet ist, die Leistungsaufnahme des Elektromotors auf einen maximal zulässigen Maximalleistungswert ($P_{max}$) zu beschränken und diesen Maximalleistungswert während des Betriebs des Elektromotors in Abhängigkeit von dem mindestens einen Temperaturwert (T) anzupassen.

Durch diese dynamische Anpassung des Maximalleistungswertes wird die gewünschte Leistungsbegrenzung erreicht, mit welcher der Anwender über eine veränderliche Drehzahl basierend auf veränderlicher Belastung, insbesondere über einen verstärkten Drehzahlabfall bei gestiegener Belastung, die notwendige Rückmeldung zum aktuellen Belastungszustand der Maschine erhält. Es erfolgt eine Orientierung an der tatsächlichen Temperatur von bestimmenden Komponenten, so dass die Nutzung des Elektrowerkzeugs situationsabhängig flexibel stattfindet.

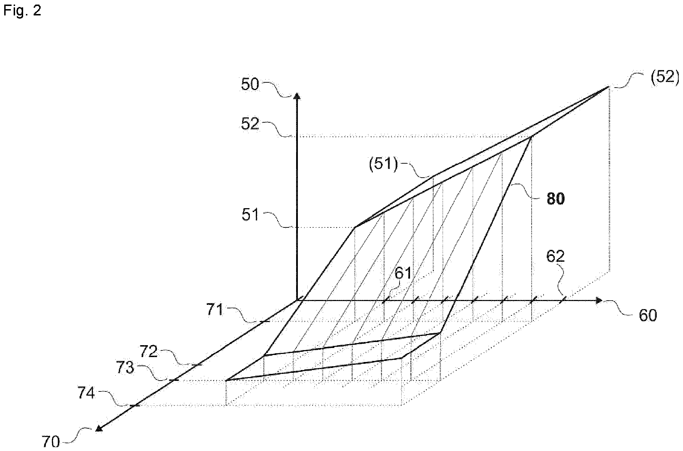

Betreibt der Anwender die mit der vorliegenden Erfindung begrenzte Maschine weiter im nunmehr erkennbaren Überlastbereich (deutlich geringere Drehzahl), kann die Motorsteuerung vorteilhafterweise so ausgestaltet sein, dass bei der dann zu erwartenden Übertemperatur die herkömmliche Übertemperaturabschaltung eingreift. Zu diesem Zeitpunkt kommt diese Übertemperaturabschaltung bei passenden Parametern aber nicht unerwartet und wird bei bestimmungsgemäßer Arbeit mit dem Einsatzwerkzeug auch kaum erreicht. Vorteilhaft kann der nach Fig. 2 gezeigte Parameterraum so festgelegt werden, dass für jede Solldrehzahl eine individuelle Einstellung zu entweder einer höheren Absicherung gegenüber einer Übertemperaturabschaltung (erfindungsgemäß) oder zu einer höheren Überlastfähigkeit mit schnellerem Eintritt einer Übertemperaturabschaltung (herkömmlich) erreicht wird.

Der Elektromotor ist vorzugsweise ein Gleichstrommotor, vorzugsweise ein bürstenbehafteter Gleichstrommotor, noch bevorzugter ein bürstenloser Gleichstrommotor (EC-Gleichstrommotor), vorzugsweise ein gekapselter oder vollgekapselter Elektromotor, vorzugsweise ein Nebenschlussmotor.

Das Elektrowerkzeug ist vorzugsweise ein Winkelschleifer, ein Schleifgerät, eine Kernbohrmaschine, oder eine Säge.

Die Temperatursensoreinrichtung weist vorzugsweise mindestens einen, vorzugsweise genau einen Temperatursensor auf, der mit einer Elektrowerkzeugkomponente thermisch verbindbar ist oder thermisch verbunden ist. Diese Elektrowerkzeugkomponente ist insbesondere eine solche, die die maximale Dauerleistung des Elektrowerkzeugs durch ihre thermische Auslegung prägt oder maßgeblich bestimmt, also eine thermisch bestimmende Elektrowerkzeugkomponente. Ein Beispiel für eine die Betriebstemperatur nicht prägende, aber die Dauerleistung begrenzende Komponente kann ein Brückengleichrichter der Elektronik eines Elektrowerkzeugs sein. Der Brückengleichrichter kann nur unwesentlich zur Erwärmung der Maschine beitragen, kann aber gleich nach dem Motor die thermisch bestimmende / begrenzende Komponente sein. In vielen Fällen ist die Elektrowerkzeugkomponente ein Teil des Elektromotors oder der Leistungselektronik, bei akkubetriebenen Elektrowerkzeugen kann die Elektrowerkzeugkomponente auch ein Teil des Akkus sein. Es kommt insbesondere darauf an, die für verschiedene Betriebszustände des Elektromotors, gekennzeichnet durch Drehzahl und Drehmoment, charakteristischen Temperaturen reproduzierbar zu erfassen. Es können mehrere Temperatursensoren vorgesehen sein, aus denen beispielsweise durch mathematische Operation, insbesondere eine Mittelwertbildung, der gewünschte Temperaturwert ermittelt wird. Ein Temperatursensor kann im thermischen und/oder physikalischen Kontakt mit einer Elektrowerkzeugkomponente stehen, die insbesondere eine thermisch limitierte Komponente sein kann.

Die Temperatursensoreinrichtung kann eine Temperatur über die Messung einer Spannung, eines Stroms, oder eines Widerstands erfassen, oder auch über eine optische Messung.

Die Motorsteuerung dient insbesondere dazu, bei einem drehzahlgesteuerten Elektromotor die Drehzahl festzulegen, insbesondere mittels einer Drehzahlregelung. Dazu weist die Motorsteuerung die Leistungsbegrenzungseinrichtung und vorzugsweise eine Drehzahlregelung auf. Die Drehzahlregelung ist eine Einrichtung der Motorsteuerung zur Beeinflussung der Ist-Drehzahl. Die Drehzahlregelung ist vorzugsweise dazu eingerichtet, insbesondere dazu programmiert, die Drehzahl mittels eines Regelkreises auf eine vom Benutzer vorgegebene Solldrehzahl zu regeln, insbesondere insofern diese Solldrehzahl bei Vorliegen des, insbesondere von der Leistungsbegrenzungseinrichtung angepassten, Maximalleistungswertes ($P_{max}$) erreichbar ist.

Die Motorsteuerung weist vorzugsweise eine Leistungsstufe auf, welche insbesondere aus der Drehzahlregelung die Ansteuerung erhält und aus der der Elektromotor insbesondere seinen Strom bezieht. Die Leistungsstufe wird vorzugsweise mit einer Pulsweitenmodulation angesteuert. Die Ansteuerung mit einer Pulsweitenmodulation erlaubt einen hohen Dynamikumfang bei der Bestromung des Elektromotors bei gleichzeitig geringen Verlusten in der Leistungsstufe. Bei einem bürstenlosen Gleichstrommotor wird die Kommutierung elektrisch bzw. elektronisch umgesetzt.

Die Leistungsmesseinrichtung ist vorzugsweise eine Strommesseinrichtung, mittels der ein vom Elektromotor aufgenommener Strom (I) als Stromwert erfasst wird, wobei der Leistungsaufnahmewert ein Stromwert (I) ist, der vorzugsweise mit einer festen Spannung (U) oder vorzugsweise mit dem von einer Spannungsmesseinrichtung erfassten Spannungswert (U) multipliziert wird. Die Strommesseinrichtung und / oder die Spannungsmesseinrichtung kann Bestandteil der Leistungsstufe sein, oder kann separat zur Leistungsstufe ausgeführt sein. Die Leistungsaufnahme (P) kann vereinfachend und unter der Voraussetzung einer bekannten und konstanten Versorgungsspannung an der Leistungsstufe und somit am Elektromotor auch nur durch einen von einer Strommesseinrichtung erfassten Strom (I) verkörpert werden.

Die Steuereinrichtung kann mindestens eine, mehrere oder alle der folgenden Komponenten aufweisen oder daraus bestehen: Mikrocontroller, CPU, Datenspeicher, Datenschnittstelle, Spannungsversorgungsschnittstelle. Vorzugsweise ist die Steuereinrichtung programmierbar. Funktionen der Steuereinrichtung können in Hardware- und/oder in Software implementiert sein, insbesondere durch elektronische Bauteile und/oder eine entsprechende Programmierung.

Die Steuereinrichtung ist gemäß der Erfindung dazu programmiert, die Leistungsaufnahme (P; I) des Elektromotors auf den maximal zulässigen Maximalleistungswert ($P_{max}$) zu beschränken und diesen Maximalleistungswert ($P_{max}$) während des Betriebs des Elektromotors in Abhängigkeit von dem mindestens einen Temperaturwert (T) anzupassen. Zu diesem Zweck weist die Steuereinrichtung, insbesondere in einem Datenspeicher der Steuereinrichtung bzw. der Motorsteuerung, einen Programmcode auf, der, wenn er durch einen Mikrocontroller der Steuereinrichtung ausgeführt wird, bewirkt, die Leistungsaufnahme (P; I) des Elektromotors auf den maximal zulässigen Maximalleistungswert ($P_{max}$) zu beschränken und diesen Maximalleistungswert ($P_{max}$) während des Betriebs des Elektromotors in Abhängigkeit von dem mindestens einen Temperaturwert (T) anzupassen.

Vorzugsweise weist die Steuereinrichtung eine Drehzahlregelung auf, die dazu eingerichtet ist, insbesondere programmiert ist, eine Drehzahl n zu regeln, wobei die sich einstellende Drehzahl n abhängig ist von einer vom Benutzer vorgebbaren Solldrehzahl $n_{soll}$, dem vorliegenden Drehmoment $M_{ist}$, dem Maximalleistungswert $P_{max}$, insbesondere dem maximalen Motorstrom $I_{max}$ - $P_{max}$, und dem mindestens einen Temperaturwert T, und die sich einstellende Drehzahl n insbesondere eine Funktion $n(n_{soll}; M_{ist}; P_{max}; T)$ der Solldrehzahl $n_{soll}$, des vorliegenden Drehmomentes $M_{ist}$, des Maximalleistungswertes $P_{max}$, insbesondere des Motorstroms $I_{max}$ - $P_{max}$, und des mindestens einen Temperaturwertes T ist. Die Drehzahlregelung kann durch den bereits beschriebenen Programmcode implementiert sein, und/oder durch einen anderen Programmcode und/oder eine elektronische Schaltung.

Die Drehzahlregelung ist vorzugsweise so eingerichtet, dass die durch Vorgabe der Solldrehzahl eingestellte bzw. geregelte Drehzahl, vorzugsweise ausschließlich, von der Leistungsbegrenzungseinrichtung, insbesondere Strombegrenzungseinrichtung, reduzierbar (bzw. auch: nach Reduzierung wieder erhöhbar) ist, aber insbesondere nicht direkt von der Leistung oder dem Strom abhängt. Die Drehzahlregelung ist vorzugsweise dazu eingerichtet, insbesondere programmiert, die einzustellende Drehzahl, insbesondere in Abhängigkeit von einem Sollwert $n_{soll}$, unabhängig vom Strom $I_{mot}$ zu bestimmen, solange der Maximalleistungswert $P_{max}$ nicht überschritten wird, und/oder unter der Bedingung, dass der mindestens eine Temperaturwert, insbesondere eine Temperatur T nicht überschritten wird.

Gemäß der Erfindung ist der Maximalleistungswert $P_{max}$ eine Funktion $P_{max}(n_{soll}; T)$ des mindestens einen Temperaturwertes T und der Solldrehzahl $n_{soll}$.

Insbesondere ist der maximale Motorstrom $I_{max}$ eine Funktion $I_{max}(n_{soll}; T)$ des mindestens einen Temperaturwertes T und der Solldrehzahl $n_{soll}$. Auf diese Weise kann einfach ein Parameterraum umgesetzt werden, durch den $P_{max}$ festgelegt ist.

Es gibt verschiedene regelungstechnische Möglichkeiten, diese Leistungsbegrenzung im Zusammenspiel mit einer vorhandenen Drehzahlregelung umzusetzen. Die vorzugsweise zu wählende Variante kann dabei unter anderem von der Art der Quellspannung (AC oder DC), dem Ansprechverhalten der Regelstrecke, der Eingriffsmöglichkeit in die Stellgröße und/oder von den programmtechnischen Voraussetzungen abhängen.

Die Umsetzung der gewählten regelungstechnischen Variante erfolgt vorzugsweise, indem die Steuerungseinrichtung bzw. die Leistungsbegrenzungseinrichtung jeweils dazu eingerichtet, insbesondere dazu programmiert ist, die gemäß der Variante vorliegende Funktionalität zu realisieren:

Vorzugsweise wird hier die Variante eines dem Drehzahlregler überlagerten Strombegrenzungsreglers verwendet. Dieser Strombegrenzungsregler greift vorzugsweise ein, insbesondere nur dann ein, wenn der

aufgrund der Solldrehzahl $n_{soll}$ und des mindestens einen Temperaturwertes T festgelegte Maximalleistungswert $P_{max}$, insbesondere für eine bestimmte Dauer, überschritten wird.

Vorzugsweise handelt es sich, insbesondere ausschließlich, um die Begrenzung des Motorstromes, insbesondere sofern die Quellspannung für den Antrieb (Netz oder Akku) in zeitlicher Hinsicht als konstant und insbesondere auch als lastunabhängig betrachtet werden kann. Insbesondere, falls die Zeitkonstante des Antriebes geringer ist als die der Quellspannung oder falls die Lastabhängigkeit der Quellspannung ins Gewicht fällt, ist es bevorzugt, dass die quellspannungsseitigen Veränderungen bzw. der Innenwiderstand der Spannungsquelle in die Leistungsbegrenzung, also in die Bestimmung von $P_{max}$, eingerechnet werden.

Die vorliegend verwendete Ausdrucksweise "...der Drehzahlregler regelt gemäß einer Funktion" bedeutet, dass die Drehzahlregelung dazu eingerichtet, insbesondere programmiert ist, die Regelung gemäß der Funktion umzusetzen.

Befindet sich die momentane Leistungsaufnahme unterhalb der erlaubten Maximalleistung, regelt vorzugsweise der Drehzahlregler über die Stellgröße zunächst mit vollem Aussteuerbereich, um die vorgegebene Solldrehzahl zu erreichen. Für moderne Antriebe handelt es sich bei der Stellgröße vorzugsweise um das Tastverhältnis eines oder mehrerer PWM-Signale, welche zum Bestromen des Motors an die Leistungsstufe geführt werden. Dabei stellt sich die momentane Drehzahl aufgrund der Kennlinie des Motors und des momentan abverlangten Drehmomentes ein. Stößt der Drehzahlregler auf den maximal möglichen Wert für die Stellgröße (Tastverhältnis 1), so erreicht der Antrieb seine natürliche Kennlinie für die momentan vorliegende Quellspannung.

Erreicht die momentane Leistungsaufnahme oder ihr vorzugsweise mit einer Zeitkonstanten gefilterter Wert den festgelegten Maximalleistungswert, so greift der Strombegrenzungsregler vorzugsweise über eine Reduzierung des maximalen Ausgabewertes an die Stellgröße ein, welche dadurch nicht mehr bis zur maximal möglichen Höhe wirken kann. Dadurch bleibt der Drehzahlregler in seinem oberen Anschlag und der Strombegrenzungsregler reduziert diesen oberen Anschlag so lange, bis die erlaubte Maximalleistung erreicht wird. Diese Leistungsbegrenzung wirkt demnach auch drehzahlreduzierend.

Diese aufgrund der Leistungsbegrenzung einbrechende Drehzahl, welche sich anhand der Parameter dynamisch ändert, wirkt für den Anwender als Rückmeldung der Überlastsituation. Erhöht dieser die Last bzw. das Drehmoment weiter, so fällt die Drehzahl weiter deutlich ab. Entlastet er hingegen das Elektrowerkzeug in ausreichendem Maße, so überlässt der Strombegrenzungsregler - vorzugsweise mit eben der gleichen Filterung seines Leistungswertes - wieder dem Drehzahlregler die Ausgabe der Stellgröße und erlaubt damit wieder die Beschleunigung des Antriebes bis hin zur vollen Drehzahl.

Die erfindungsgemäße dynamische Beeinflussung des maximalen Stromes bzw. der maximalen Leistung stellt aber insbesondere keinen überlagerten Temperaturregler der Steuerung dar. Es handelt sich insbesondere um eine per Kennfeld (Fig. 2) vorgegebene dynamische Gegenkopplung zur Verlangsamung der Erwärmung mittels des Einbremsens des Benutzers. Mithin wird insbesondere keine Temperatur als Solltemperatur vorgegeben, wie dies bei einer klassischen Temperaturregelung der Fall wäre.

Die Leistungsbegrenzungseinrichtung, insbesondere der Strombegrenzungsregler, ist insbesondere auch dazu eingerichtet, bei sinkendem Wert T der Temperatur bzw. bei sinkender Belastung (gekennzeichnet durch ein sinkendes Drehmoment und einen sinkenden Motorstrom) den Maximalleistungswert nach einer vorausgegangenen Reduzierung wieder zu erhöhen.

Gemäß der Erfindung ist die Steuereinrichtung dazu programmiert, bei einer Erhöhung des mindestens einen Temperaturwertes während des Betriebs des Elektromotors den Maximalleistungswert zu reduzieren, wodurch insbesondere auch die erreichbare Drehzahl im oberen Lastbereich weiter reduziert wird.

Vorzugsweise weist die Steuereinrichtung eine Übertemperaturabschaltung auf, die die Leistungsaufnahme des Elektromotors unterbricht, somit den Elektromotor abschaltet, wenn der mindestens eine Temperaturwert einen motorabhängig festgelegten Übertemperaturwert erreicht oder überschreitet.

Die Erfindung betrifft eine Motorsteuerung für einen Elektromotor, ein Elektrowerkzeug mit dieser Steuerung, ein Verfahren zur Steuerung eines Elektromotors, und ein Computerprogramm. Die Erfindung ist im beigefügten Anspruchssatz definiert.

Bevorzugte Ausgestaltungen des erfindungsgemäßen Verfahrens und des Computerprogramms bzw. des Computerprogrammcodes können aus der Beschreibung der Motorsteuerung und dessen bevorzugter Ausgestaltung entnommen werden.

Im Folgenden wird die Erfindung an mehreren in den Zeichnungen dargestellten Ausführungsbeispielen näher erläutert; es zeigen:

Fig. 1    ein Diagramm mit Drehzahlkennlinien bei einem drehzahlgeregelten Elektromotor, insbesondere dem, insbesondere bürstenlosen, Elektromotor eines Elektrowerkzeugs, insbesondere eines Winkelschleifers, das die erfindungsgemäße Motorsteuerung in beispielhafter Ausgestaltung aufweist.

Fig. 2    ein Diagramm mit einer Charakteristik der Leistungsbegrenzung bei der beispielhaften erfindungsgemäßen Motorsteuerung des Elektromotors des in Fig. 1 genannten Elektrowerkzeugs.

Fig. 3    ein Diagramm mit einem Schaltbild der erfindungsgemäßen elektronischen Motorsteuerung gemäß Ausführungsbeispiel des Elektromotors des in Fig. 1 genannten beispielhaften erfindungsgemäßen Elektrowerkzeugs.

Fig. 4      das in Fig. 1 genannte, beispielhafte erfindungsgemäße Elektrowerkzeug.

Figur 1 zeigt ein Diagramm mit Motorkennlinien, insbesondere Drehzahlkennlinien, bei denen die Drehzahl n (10; Ordinate) gegen das Drehmoment M (20; Abszisse) aufgetragen ist. Es handelt sich um Kennlinien bei einem drehzahlgeregelten Elektromotor, insbesondere dem, insbesondere bürstenlosen, Elektromotor eines erfindungsgemäßen und beispielhaften Elektrowerkzeugs, insbesondere eines Winkelschleifers. Insbesondere handelt es sich um einen Nebenschlussmotor.

Die Drehzahlkennlinie 30 ist die natürliche Antriebskennlinie bei Nennspannung:

$$n = n_0 - m * M,$$

wobei n die Drehzahl ist, $n_0$ die ungeregelte Leerlaufdrehzahl 11, m die Kennliniensteigung, M das Drehmoment. Der Schnittpunkt der Kennlinie 30 mit der Abszisse kennzeichnet das Blockier-Drehmoment 24 der Antriebskennlinie.

Die Nennspannung eines Gleichstrommotors ist die Spannung, bei der der Motor unter Nennbedingungen betrieben werden soll. Nennbedingungen beziehen sich auf die Betriebsparameter, die für den Motor spezifiziert sind, einschließlich der Nenndrehzahl, der Nennleistung, der Nennstromstärke und der Nennspannung.

Die Nenndrehzahl stellt sich gemäß der Drehzahlkennlinie ein und die Wahl der Nennspannung hängt davon ab, wo die maximale Leerlaufdrehzahl liegen sollte.

Beispielsweise liegt bei erhöhter Spannung die natürliche Antriebskennlinie 32 über der Antriebskennlinie 30 der Nennspannung und weist dieselbe Steigung und eine höhere Leerlaufdrehzahl auf. Der Nennstrom des Motors ergibt sich aus der maximal zulässigen Dauerbelastung des Motors unter thermischen Bedingungen. Der Dauerbetriebsbereich wird durch die beiden Kriterien des zulässigen Dauerdrehmoments und der Grenzdrehzahl begrenzt. Der Motor darf aus thermischen Gründen nur mit dem maximal zulässigen Dauerstrom belastet werden, aber kurzzeitig sind höhere Ströme (Drehmomente) erlaubt, solange die Wicklungstemperatur unterhalb des kritischen Wertes bleibt. Der maximal zulässige Dauerstrom hängt zudem von der vorgegebenen Solldrehzahl und der damit verbundenen Kühlleistung des bei Elektrowerkzeugen meist mit der Motorwelle verbundenen Lüfterrades ab. Phasen mit erhöhten Strömen sind zeitlich begrenzt, wobei die thermische Zeitkonstante der Wicklung oder anderer thermisch bestimmender Elektrowerkzeugkomponenten, z.B. Leistungshalbleiter, ein Maß dafür ist, wie lange solche kurzzeitigen Überbelastungen dauern dürfen. Die Größenordnung der Zeiten mit Überlast hängt von Motorstrom und Starttemperatur der thermisch bestimmenden Elektrowerkzeugkomponente ab und liegt im Bereich von einigen Sekunden bis zu einigen Minuten.

Die Wicklung wird durch Stromwärmeverluste erwärmt, und es ist wichtig, dass die entstehende Wärme effektiv abgeführt wird, um eine Überhitzung zu vermeiden. Dies ist besonders bei vollgekapselten Motoren wichtig. Erfindungsgemäß wird eine Überhitzung und Überlastung durch eine Begrenzung der Leistungsaufnahme des Elektromotors in Abhängigkeit von der (gestiegenen) Temperatur vermieden. Der Benutzer erhält durch eine durch die Leistungsaufnahmebegrenzung reduzierte Drehzahl eine Rückmeldung für seine Arbeit mit dem Elektrowerkzeug.

Der maximal zulässige Dauerstrom wird vorzugsweise so gewählt, dass er unter Standardbedingungen (25 °C Umgebungstemperatur, keine Wärmeabfuhr über den Flansch, freie Luftzirkulation) die maximale Wicklungstemperatur nicht überschreitet. Dieser Nennstrom ist stark abhängig von der Art der Wicklung, wobei Dünndrahtwicklungen kleinere Nennströme als Dickdrahtwicklungen haben können. Graphitbürstenmotoren haben bei höheren Drehzahlen einen erhöhten Reibungsverlust, der bei EC-Motoren entfällt. Eisenverluste in Form von Ummagnetisierungs- und Wirbelstromverlusten nehmen auch bei EC-Motoren mit steigender Drehzahl zu und erzeugen eine zusätzliche Erwärmung. Gleichzeitig steigt mit höheren Drehzahlen der Kühlluftstrom und somit je nach thermischer Auslegung auch die Kühlleistung, da in Elektrowerkzeugen das Lüfterrad meist fest mit der Motorwelle verbunden ist. Das Nenndrehmoment, das dem Nennstrom zugeordnet ist, hängt von der elektromagnetischen Auslegung des jeweiligen Motors ab. Die maximale Drehzahl wird beim DC-Motor hauptsächlich durch das Kommutierungssystem begrenzt. Aber auch andere Antriebselemente wie Getriebe, Lager, Unwuchten oder maximale Schleuderdrehzahlen sind relevant.

Im Diagramm in Figur 1 sind einige Geraden mit einer von der Steigung m der natürlichen Antriebskennlinie abweichenden, nämlich steileren Steigung $m_2$ eingetragen, also mit einem betragsmäßig höheren Wert von $m_2 > m$:

- die Antriebskennlinie 40 bei Leistungsbegrenzung in höchster Drehzahlstufe und niedriger Temperatur,
- die Antriebskennlinie 41 bei Leistungsbegrenzung in höchster Drehzahlstufe und hoher Temperatur,
- die Antriebskennlinie 42 bei Leistungsbegrenzung in niedrigster Drehzahlstufe und niedriger Temperatur und
- die Antriebskennlinie 43 bei Leistungsbegrenzung in niedrigster Drehzahlstufe und hoher Temperatur.

Es handelt sich um Kennlinien, die sich bei einem erfindungsgemäßen Motor mit Leistungsbegrenzungseinrichtung gemäß Ausführungsbeispiel einstellen.

Der im Betrieb zugelassene Solldrehzahlbereich 14 liegt zwischen der niedrigsten Stufe 13 und der höchsten Stufe 12 der Solldrehzahl $n_{soll}$. In der höchsten Stufe 12 der Drehzahl existiert ein drehzahlgeregelter Kennlinienbereich 33, in dem die Drehzahl auch bei steigenden Drehmomenten konstant bleibt. Es handelt sich um den Arbeitsbereich des Elektromotors, in dem ein Dauerbetrieb möglich ist, und zwar bis zum Drehmoment 22. Der weitere Kennlinienverlauf zu noch höheren Drehmomenten hängt nun von der am Elektromotor gemessenen, und je nach Zustand veränderlichen Temperatur ab:

Eine kalte Maschine startet mit einer Leistungsbegrenzung, die einen Teil der natürlichen Motorkennlinie 31 erlaubt und erst bei dem Drehmoment 23 die Leistung des Antriebes einschränkt, indem sie den dort einsetzenden steileren Drehzahlabfall im Kennlinienast 40 erzeugt. Dieses Verhalten gilt für Temperaturen unterhalb der 71 (Fig. 2). Ab dann wandert mit zunehmender Temperatur dieser Kennlinienast 40 (infolge einer reduzierten Leistungsbegrenzung) dann hin zum Kennlinienast 41. Es wird deshalb erst die Antriebskennlinie 40 und dann die Antriebskennlinie 41 erklärt:

Antriebskennlinie 40:

Die Antriebskennlinie 40 entsteht durch die Leistungsbegrenzung bei der für die Drehzahlstufe 12 höchsten erlaubten Leistung. Diese wirkt vom kalten Zustand bis zur Temperatur 71, also auch bei Temperaturen kleiner der 71. Die Leistungsbegrenzung wird bei diesen Temperaturen erst oberhalb des Drehmomentes 23 aktiv und kann zum Beispiel dazu dienen, nicht in eine Abschaltung durch andere Schutzmechanismen zu geraten, welche nur bei einem Fehlverhalten des Antriebes eingreifen sollen. Daher kann der Benutzer einen Teil der natürlichen Kennlinie 31 verwenden, wodurch die Drehzahl bis zum Drehmoment 23 mit der Steigung m und oberhalb dieses Drehmomentes mit der Steigung $m_2$ sinkt. Der Kennlinienast 40 bildet den von der Leistungsbegrenzung erzeugten Teil des Überlastbereiches in höchster Stufe 12 und bei niedriger Temperatur 71 und setzt sich fort bis zum Stillstand.

Ab der 71 wird dann schrittweise bis hin zur 73 die Leistungsbegrenzung weiter eingeschränkt bis an der 73 schließlich der Kennlinienast 41 wirkt.

Antriebskennlinie 41:

Ab der hohen Temperatur 73 (siehe Fig. 2) und bis zur Abschalttemperatur 74 gilt der von der Leistungsbegrenzung für die höchste Drehzahlstufe 12 minimal erlaubte Strom, der die Antriebskennlinie 41 erzeugt - das ist die Antriebskennlinie bei Leistungsbegrenzung in höchster Stufe 12 und bei höchster Temperatur 73, welche bereits bei dem Drehmoment 22 wirkt. Der Benutzer erfährt dann bei Überlast oberhalb der im Dauerbetrieb nutzbaren Kennlinie 33 sofort einen Drehzahlabfall mit der Steigung $m_2$ und kann seine Handhabung des Elektrowerkzeugs entsprechend abstimmen. Insbesondere wird dem Benutzer so eine kontinuierlichere Arbeit mit dem Elektrowerkzeug ermöglicht. Die durch die Leistungsbegrenzung erzeugte Antriebskennlinie 41 setzt sich fort bis zum Stillstand.

In der niedrigsten Drehzahlstufe 13 existiert ein drehzahlgeregelter Kennlinienbereich 34, in dem die niedrige Drehzahl auch bei steigenden Drehmomenten wenigstens bis zum Drehmoment 21 konstant bleibt. Es handelt sich wieder um den Arbeitsbereich für den Dauerbetrieb des Elektromotors. Der weitere Kennlinienverlauf zu noch höheren Drehmomenten hängt nun wieder von der am Elektromotor oder einer anderen thermisch bestimmenden Elektrowerkzeugkomponente gemessenen, und je nach Zustand veränderlichen Temperatur ab:

Antriebskennlinie 42:

Läuft der Motor bei niedrigster Drehzahlstufe 13 und Temperaturen kleiner oder gleich 71 (siehe Fig. 2), gilt der für die niedrigste Drehzahlstufe höchste zur Verfügung gestellte Strom von der Leistungsbegrenzungseinrichtung und bewirkt bei entsprechender Belastung den Kennlinienast 42 - das ist die Antriebskennlinie bei Leistungsbegrenzung in niedrigster Stufe 12 und niedriger Temperatur 71.

Antriebskennlinie 43:

Ab der hohen Temperatur 73 (siehe Fig. 2) und bis zur Abschalttemperatur 74 gilt der von der Leistungsbegrenzung für die niedrigste Drehzahlstufe 13 minimal erlaubte Strom. Dadurch verläuft die Arbeitskennlinie oberhalb des Drehmoments 21 auf dem Kennlinienast 43, welcher sich bis zum Stillstand fortsetzt.

Bei einer hohen Temperatur 72 knapp unterhalb der kritischen Temperatur 73 wird eine Warneinrichtung des Elektrowerkzeugs aktiv, die den Benutzer vor dem Erreichen der kritischen Temperatur 73 warnt. Sollte die höchste zulässige Temperatur 74 (Abschalttemperatur) überschritten werden, wird die Übertemperaturschaltung den Motor abschalten.

Figur 2 zeigt eine $P_{max}(n_{soll}; T)$ Charakteristik der erfindungsgemäßen Leistungsbegrenzung. Die maximal verfügbare Leistung in Form eines maximal verfügbaren Stroms $I_{max}$ wird hier in Abhängigkeit von einem Wertepaar $(n_{soll}; T)$ der anliegenden Solldrehzahl $n_{soll}$ und der gemessenen Motortemperatur T festgelegt. Diese Charakteristik wird für ein Elektrowerkzeug in einem Prüfstand ermittelt und dann in einem Datenspeicher der Steuereinrichtung gespeichert.

Es liegt nun eine bestimmte Solldrehzahl 60 und eine bestimmte Temperatur 70 vor. Die Solldrehzahl 60 ist "relativ" und entspricht vorzugsweise der Stellung eines Bedienelementes (Potentiometer, Drehrad, Hebel oder andere Bedieneinrichtung) der Maschine. Die maximale Leistungsaufnahme für eine bestimmte Stellung ("Leistungsbegrenzung 50") ergibt sich dann aus dem eindeutigen Punkt $P_{max}(n_{soll}; T)$ in Figur 2.

Die maximale Leistungsaufnahme $P_{max}$ prägt die tatsächliche Drehzahl n, sobald diese Leistung erreicht wird: steigt die Temperatur, dann wird bei dieser Leistung auch immer die tatsächliche Drehzahl reduziert, denn es liegt die Abhängigkeit $n(n_{soll}; P_{max}(T))$ vor. Wählt der Benutzer die maximale Solldrehzahl 62 ($n_{soll\_max}$ bei 12) aus, dann ergibt sich daraus, bei geringer Temperatur 71, ein maximal erreichbarer Leistungsaufnahmewert $P_{max} \sim I_{max}$, 52 ganz außen in Fig. 2.

Bei der höchsten zulässigen Temperatur 73 bewirkt (Fig. 2), im Vergleich zu einer niedrigeren Temperatur 72 oder 71, eine Erhöhung der Solldrehzahl 60 durch den Benutzer eine geringere Zunahme des von der Leistungsbegrenzungseinrichtung zur Verfügung gestellten Stroms $I_{max}$. Entsprechend bewirkt bei der niedrigen Temperatur 71, im Vergleich zu einer höheren Temperatur 72 oder 73, eine Erhöhung der Solldrehzahl 60 durch den Benutzer eine größere Zunahme des von der Leistungsbegrenzungseinrichtung zur Verfügung gestellten Stroms $I_{max}$.

Hält der Benutzer die Solldrehzahlvorwahl des Elektrowerkzeugs unverändert, also z.B. die Solldrehzahl 61 konstant, dann sinkt, ausgehend von dem dort maximal verfügbaren Strom 51, der von der Leistungsbegrenzungseinrichtung zur Verfügung gestellte Strom $I_{max}$, falls die Motortemperatur von 71 auf 72 steigt.

Der Benutzer erfährt die temperaturabhängige Leistungsreduzierung im oberen Lastbereich durch die Drehzahlreduzierung, die bei höchster Temperatur 73 und höchster Drehzahl 12 die Kennlinie 41 erzeugt, und bei niedriger Temperatur 71 die Kennlinie 40 erzeugt. Diese Drehzahlreduzierung warnt den Benutzer vor der Überlast und erlaubt ihm, seine Arbeitsweise anzupassen, insbesondere das Drehmoment zu reduzieren, um eine unterbrechungsfreie, kontinuierlichere Arbeit mit dem Werkzeug zu ermöglichen, bei der insbesondere Motorabschaltungen durch Übertemperatur vermieden werden.

Fig. 2 zeigt keine konkrete Drehzahl $n = n_{mot}$, denn diese stellt sich abhängig von der Last und vom erlaubten Strom $I_{max}$ ein. Je mehr Strom $I_{max}$ erlaubt ist, desto länger kann die Drehzahlregelung die Drehzahl $n_{mot}$ hoch halten. Aber die Drehzahlregelung 110 bekommt durch den Leistungsbegrenzer 120 (hier Strombegrenzer) dann eine Grenze gesetzt, wenn der Strom $I_{aktuell}$ für die Paarung aus Solldrehzahl $n_{soll}$ und aktueller Temperatur $T = T_{aktuell}$ zu hoch wird. Diese Charakteristik aus Fig. 2 ist in einem Datenspeicher 121 der Steuereinrichtung hinterlegt und setzt, durch eine entsprechende Programmierung der Steuereinrichtung, dem Elektromotor und damit dem Benutzer den jeweils verfügbaren Leistungsrahmen.

Die Eingabeeinrichtung 101 bzw. der Aktuator kann insbesondere aufweisen: einen Druckknopf, einen Gasgebeschalter, ein Stellrad / Potentiometer bzw. eine digitale Sollwertvorgabe mit Tastern und Display oder eine ferngesteuerte Sollwertvorgabe über ein elektrisches Signal.

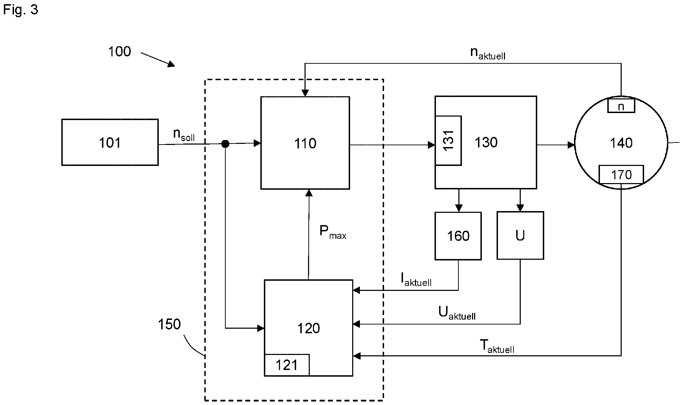

In Figur 3 ist ein Diagramm mit einem Schaltbild einer Motoransteuerung 100 eines beispielhaften erfindungsgemäßen Elektrowerkzeugs 1 gezeigt, das insbesondere die Verschaltung der elektronischen Steuereinrichtung 150 zeigt.

Der Benutzer gibt - per Eingabeeinrichtung 101, z.B. per Aktuatorauslenkung - einen Sollwert $n_{soll}$ für die Drehzahl vor, und $n_{soll}$ wird an eine Drehzahlregelung 110 und eine Leistungsbegrenzungseinrichtung 120 eingegeben.

Die Drehzahlregelung 110 wirkt durch Eingabe einer Pulsweitenmodulation an den Treiber 131 einer Leistungsstufe 130, die den Strom für den Elektromotor 140 bereitstellt. Der Elektromotor verwendet einen Strom in Abhängigkeit von der mechanischen Last, die er im Betrieb erfährt, also in Abhängigkeit von dem am Elektromotor anliegenden Drehmoment.

Der Elektromotor liefert seine aktuelle Drehzahl $n_{aktuell}$ zurück an die Drehzahlregelung 110, die am Elektromotor mittels mindestens eines Temperatursensors gemessene Temperatur T an die Leistungsbegrenzungseinrichtung 120. Diese verarbeitet auch die von der Strommesseinrichtung 160 der Leistungsstufe 130 gelieferten Werte des vom Elektromotor aktuell verwendeten Stroms $I_{aktuell}$, der dem am Elektromotor anliegenden Drehmoment proportional ist, und der Spannung $U_{aktuell}$.

Die Leistungsbegrenzungseinrichtung 120 ermittelt aus den aktuell eingegebenen Werten ($n_{soll}$, $n_{aktuell}$, T, $I_{aktuell}$, $U_{aktuell}$) eine Leistungsbegrenzung, in Form eines Maximalleistungswertes $P_{max}$, hier eines maximal erlaubten Stromwertes $I_{max}$. Dieser Maximalleistungswert begrenzt das von der Drehzahlregelung 110 an die Leistungsstufe 130 maximal ausgebbare Tastverhältnis (duty cycle) zur Ansteuerung des Motors 140.

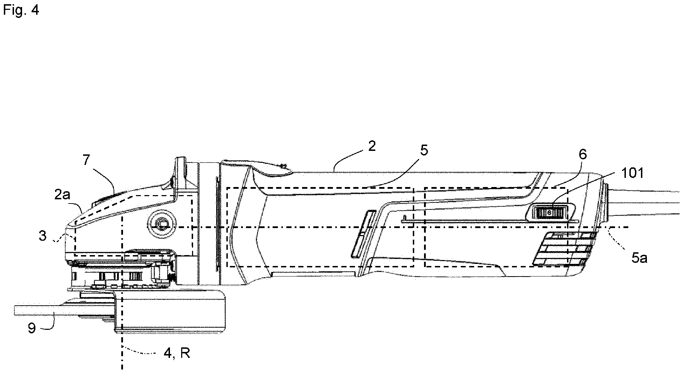

In Figur 4 ist ein als handgehaltene Werkzeugmaschine 1 ausgeführtes Elektrowerkzeug dargestellt, das eine erfindungsgemäße Motorsteuerung aufweist. Die Werkzeugmaschine ist als Winkelschleifmaschine gezeigt. Es besteht jedoch auch die Möglichkeit, dass die tragbare Werkzeugmaschine 1 eine andere Ausgestaltung aufweist, wie z.B. als Kreissägemaschine, Kernbohrmaschine oder Schleifmaschine. Das Getriebegehäuse 2a der tragbaren Werkzeugmaschine 1 dient zur Aufnahme und/oder Lagerung einer Getriebeeinheit 3. Die Getriebeeinheit 3 ist als Winkelgetriebe ausgeführt und beinhaltet eine rotierend angetriebene Abtriebswelle 4, an der eine Einsatzwerkzeugeinheit 9 mittels der Schnellspannvorrichtung 7 fixiert werden kann. Eine Schutzhaubeneinheit kann an dem Getriebegehäuse 2a bzw. dem Aufnahmeflansch einer Lagerplatte auf eine bereits bekannte Art und Weise befestigt werden, während ein Zusatzhandgriff ebenfalls an dem Getriebegehäuse 2a auf eine bereits bekannte Art und Weise angebracht werden kann. Die Antriebseinheit 5 der tragbaren Werkzeugmaschine 1 wird im hier vollgekapselten Motorgehäuse aufgenommen und/oder gelagert. Vorzugsweise treibt die Antriebseinheit 5 mittels eines Zusammenwirkens mit der Getriebeeinheit 3 die Abtriebswelle 4 um die Rotationsachse R rotierend an. Die Rotationsachse R der Abtriebswelle 4 verläuft zumindest im Wesentlichen senkrecht zu einer Antriebsrotationsachse 5a der Antriebseinheit 5. Die Antriebseinheit 5 ist als Elektromotoreinheit ausgeführt. Im Gehäuse 2 ebenfalls angeordnet ist eine Platine 6, welche die Komponenten zur elektronischen Ansteuerung und Leistungsversorgung des Elektromotors beinhaltet, insbesondere die Motorsteuerung 100 und die elektronische Steuereinrichtung 150.

**Bezugszeichenliste**

1 Elektrowerkzeug, handgehaltener EC-Winkelschleifer
2 Gehäuse des Elektrowerkzeugs
3 Getriebeeinheit
4 Abtriebswelle
5 Antriebseinheit, EC-Elektromotor
5a Antriebsrotationsachse
6 Platine mit Motorsteuerung
7 Schnellspannvorrichtung
9 Einsatzwerkzeugeinheit
10 Drehzahlachse
11 Ungeregelte Leerlaufdrehzahl
12 Solldrehzahl, höchste Stufe
13 Solldrehzahl, niedrigste Stufe
14 Solldrehzahlbereich
20 Drehmomentachse
21 Maximales Drehmoment bei niedrigster Stufe und hoher Temperatur
22 Maximales Drehmoment bei höchster Stufe und hoher Temperatur
23 Drehmoment bei maximal erlaubtem Motorstrom
24 Blockier-Drehmoment Antriebskennlinie
30 Natürliche Antriebskennlinie bei Nennspannung
31 Natürliche Antriebskennlinie, höchste Stufe
32 Natürliche Antriebskennlinie bei erhöhter Spannung
33 Drehzahlgeregelter Kennlinienbereich, höchste Stufe
34 Drehzahlgeregelter Kennlinienbereich, niedrigste Stufe
40 Antriebskennlinie bei Leistungsbegrenzung in höchster Stufe und niedriger Temperatur
41 Antriebskennlinie bei Leistungsbegrenzung in höchster Stufe und hoher Temperatur
42 Antriebskennlinie bei Leistungsbegrenzung in niedrigster Stufe und niedriger Temperatur
43 Antriebskennlinie bei Leistungsbegrenzung in niedrigster Stufe und hoher Temperatur

50 Leistungsbegrenzung (Achse)
51 Leistungsbegrenzung bei niedrigster Stufe und unkritischer Grenztemperatur
52 Leistungsbegrenzung bei höchster Stufe und unkritischer Grenztemperatur
60 Solldrehzahl (Achse)
61 Solldrehzahl niedrigste Stufe
62 Solldrehzahl höchste Stufe
70 Komponententemperatur (Achse)
71 Unkritische Grenztemperatur
72 Warngrenze Komponententemperatur
73 Kritische Grenztemperatur
74 Abschalttemperatur
80 Charakteristik der erfindungsgemäßen Leistungsbegrenzung
100 Motorsteuerung
101 Eingabeeinrichtung
110 Drehzahlregelung
120 Leistungsbegrenzungseinrichtung
121 Datenspeicher
130 Leistungsstufe
131 Treiber
140 EC-Elektromotor
150 elektronische Steuereinrichtung
160 Leistungsmesseinrichtung
170 Temperatursensor

**Patentansprüche**

1. Motorsteuerung (100) für einen, insbesondere bürstenlosen, Elektromotor (140) eines Elektrowerkzeugs (1), insbesondere eines Hand-Elektrowerkzeug, aufweisend

eine Temperatursensoreinrichtung (170), mittels der mindestens ein, vom Betrieb des Elektromotors (140) beeinflusster, Temperaturwert (T) einer Elektrowerkzeugkomponente bestimmbar ist,
eine Leistungsmesseinrichtung (160), die zur Erfassung eines die Leistungsaufnahme des Elektromotors (140) charakterisierenden Leistungsaufnahmewerts (P; I) eingerichtet ist,
eine elektronische Steuereinrichtung (150), die eine Leistungsbegrenzungseinrichtung (120) aufweist, die zur Begrenzung der Leistungsaufnahme des Elektromotors (140) dazu eingerichtet ist, die Leistungsaufnahme des Elektromotors (140) auf einen maximal zulässigen Maximalleistungswert ($P_{max}$) zu beschränken,
**dadurch gekennzeichnet,**
**dass** die Leistungsbegrenzungseinrichtung (120) weiterhin dazu eingerichtet ist, den maximal zulässigen Maximalleistungs-wert ($P_{max}$) während des Betriebs des Elektromotors (140) in Abhängigkeit von dem mindestens einen Temperaturwert (T) anzupassen,

wobei die Steuereinrichtung (150) programmierbar ist und dazu programmiert ist, die Leistungsaufnahme (P; I) des Elektromotors (140) auf den maximal zulässigen Maximalleistungswert ($P_{max}$) zu beschränken und diesen Maximalleistungswert ($P_{max}$) während des Betriebs des Elektromotors (140) in Abhängigkeit von dem mindestens einen Temperaturwert (T) anzupassen, und

wobei die Steuereinrichtung (150) programmierbar ist und dazu programmiert ist, den maximal zulässigen Maximalleistungswert (50; $P_{max}$) mit steigender Temperatur (70), insbesondere linear oder gemäß einem nicht-linearen Verlauf, zu senken und mit steigender Solldrehzahl (60, $n_{soll}$), insbesondere linear oder gemäß einem nicht-linearen Verlauf, zu erhöhen.

2. Motorsteuerung (100) gemäß Anspruch 1, wobei die Leistungsmesseinrichtung (160) eine Strommesseinrichtung (160) beinhaltet, mittels der ein vom Elektromotor (140) aufgenommener Strom (I) als Stromwert erfasst wird, und wobei der Leistungsaufnahmewert ein Stromwert (I) ist.

3. Motorsteuerung (100) gemäß einem der vorangehenden Ansprüche, wobei die Steuereinrichtung (150) eine Drehzahlregelung (110) aufweist, die dazu eingerichtet ist, insbesondere programmiert ist, die einzustellende Drehzahl (n) des Elektromotors (140), insbesondere in Abhängigkeit von einem Sollwert $n_{soll}$, unabhängig vom Strom I festzulegen, insbesondere zu regeln, unter der Bedingung, dass der Maximalleistungswert $P_{max}$ nicht überschritten wird, und/oder unter der Bedingung, dass der mindestens eine Temperaturwert eine Temperatur T nicht überschreitet.

4. Motorsteuerung (100) gemäß einem der vorangehenden Ansprüche, wobei die Steuereinrichtung (150) eine Drehzahlregelung (110) aufweist, die dazu eingerichtet ist, insbesondere programmiert ist, eine Drehzahl n zu regeln, wobei die Drehzahl n abhängig ist von einer vom Benutzer vorgebbaren Solldrehzahl $n_{soll}$, dem Maximalleistungswert $P_{max}$, dem maximalen Motorstrom $P \sim I_{max}$, und dem mindestens einen Temperaturwert T, und die Drehzahl n eine Funktion $n(n_{soll}; P_{max}; T; M; U)$ der Solldrehzahl $n_{soll}$, des Maximalleistungswertes $P_{max}$, des Motorstroms $P \sim I_{max}$, und des mindestens einen Temperaturwertes T ist.

5. Motorsteuerung (100) gemäß einem der vorangehenden Ansprüche 1 bis 4, wobei der Maximalleistungswert $P_{max}$ eine Funktion $P_{max}(n_{soll}; T)$ des mindestens einen Temperaturwertes T und der Solldrehzahl $n_{soll}$ ist, und insbesondere der maximale Motorstrom $I_{max}$

eine Funktion $I_{max}(n_{soll}; T)$ des mindestens einen Temperaturwertes T und der Solldrehzahl $n_{soll}$ ist.

6. Motorsteuerung (100) gemäß einem der vorangehenden Ansprüche, wobei die Steuereinrichtung (150) dazu eingerichtet ist, insbesondere programmiert ist, dass die Begrenzung der Leistungsaufnahme des Elektromotors (140), insbesondere eine programmierte Strombegrenzung, der Regelung der Drehzahl überlagert ist.

7. Motorsteuerung (100) gemäß einem der vorangehenden Ansprüche, wobei die Steuereinrichtung (150) dazu eingerichtet ist, insbesondere programmiert ist, dass die Begrenzung der Leistungsaufnahme des Elektromotors (140), insbesondere eine programmierte Strombegrenzung, der Regelung der Drehzahl unterlagert ist.

8. Motorsteuerung (100) gemäß einem der vorangehenden Ansprüche, wobei die Steuereinrichtung (150) dazu eingerichtet ist, insbesondere programmiert ist, bei einer Erhöhung des mindestens einen Temperaturwertes unter Last während des Betriebs des Elektromotors (140) den Maximalleistungswert zu reduzieren, wodurch insbesondere auch die Drehzahl beeinflusst wird.

9. Motorsteuerung (100) gemäß einem der vorangehenden Ansprüche, wobei die Steuereinrichtung (150) eine Übertemperaturabschaltung aufweist, die die Leistungsaufnahme des Elektromotors (140) unterbricht, wenn der mindestens eine Temperaturwert einen festgelegten Übertemperaturwert erreicht oder überschreitet.

10. Elektrowerkzeug (1), insbesondere Hand-Elektrowerkzeug, mit

einem, insbesondere bürstenlosen, Elektromotor (140),
einer mit dem Elektromotor (140) gekoppelten Antriebswelle und einer über eine Getriebeeinrichtung mit der Antriebswelle gekoppelten Abtriebswelle, mit der ein Werkzeug verbindbar ist, und
einer Motorsteuerung (100) gemäß einem der vorangehenden Ansprüche.

11. Elektrowerkzeug gemäß Anspruch 10, das als Winkelschleifer ausgebildet ist.

12. Verfahren zur Steuerung eines, insbesondere bürstenlosen, Elektromotors (140) eines Elektrowerkzeugs (1), mittels der Motorsteuerung (100) gemäß einem der Ansprüche 1 bis 9, aufweisend die Schritte

Erfassen des mindestens eines, vom Betrieb des Elektromotors (140) beeinflussten, Temperaturwertes (T) einer Elektrowerkzeugkomponente;

Erfassen eines die Leistungsaufnahme des Elektromotors (140) charakterisierenden Leistungsaufnahmewerts (P; I);

Festlegen der Leistungsaufnahme des Elektromotors (140) auf einen maximal zulässigen Maximalleistungswert ($P_{max}$);

**gekennzeichnet dadurch,**

**dass** das Verfahren weiterhin den Schritt aufweist

Anpassen dieses Maximalleistungswertes ($P_{max}$) in Abhängigkeit von dem mindestens einen Temperaturwert (T), indem der Maximalleistungswert (Pmax) mit steigender Temperatur gesenkt und mit steigender Solldrehzahl (nsoll) erhöht wird.

13. Computerprogramm, oder Speichermedium aufweisend einen Computerprogrammcode, umfassend Befehle, die bei der Ausführung des Computerprogramms durch einen Computer diesen veranlassen, die Schritte des Verfahrens nach Anspruch 12 auszuführen.

**Claims**

1. Motor control (100) for an, in particular brushless, electric motor (140) of a power tool (1), in particular a hand-held power tool, comprising

   a temperature sensor device (170), by means of which at least one temperature value (T), influenced by the operation of the electric motor (140), of a power tool component can be determined,

   a power measuring device (160) which is set up to detect a power consumption value (P; I) characterizing the power consumption of the electric motor (140),

   an electronic control device (150), comprising a power limiting device (120), which, in order to limit the power consumption of the electric motor (140), is directed to limit the power consumption of the electric motor (140) to a maximum permissible maximum power value ($P_{max}$), **characterized in that**, that the power limiting device (120) is further configured to adjust the maximum power value ($P_{max}$) during operation of the electric motor (140) as a function of the at least one temperature value (T),

   wherein the control device (150) is programmable and is programmed to limit the power consumption (P; I) of the electric motor (140) to the maximum permissible maximum power value

   ($P_{max}$) and to adjust the maximum power value ($P_{max}$) during operation of the electric motor (140) as a function of the at least one temperature value (T), and

   wherein the control device (150) is programmable and is programmed to reduce the maximum power value (50; $P_{max}$) with increasing temperature (70), in particular linearly or according to a non-linear curve, and to increase it with increasing setpoint speed (60, $n_{soll}$), in particular linearly or according to a non-linear curve.

2. Motor control (100) according to claim 1, wherein the power measuring device (160) includes a current measuring device (160) by means of which a current (I) drawn by the electric motor (140) at is detected as a current value, and wherein the power consumption value is a current value (I).

3. Motor control (100) according to one of the preceding claims, wherein the control device (150) comprises a speed control (110) which is set up, in particular programmed, to determine, in particular to control, the speed (n) of the electric motor (140) to be set, in particular as a function of a setpoint value $n_{soll}$, independently of the current I, under the condition that the maximum power value $P_{max}$ is not exceeded, and/or under the condition that the at least one temperature value does not exceed a temperature T.

4. Motor control (100) according to one of the preceding claims, wherein the control device (150) comprises a speed control (110) which is set up, in particular programmed, to control a speed n, wherein the speed n is dependent on a target speed $n_{soll}$, which can be preset by the user, the maximum power value $P_{max}$, the maximum motor current $P\sim I_{max}$, and the at least one temperature value T,

   and the speed n is a function $n(n_{soll}; P_{max}; T; M; U)$ of the target speed $n_{soll}$, the maximum power value $P_{max}$, the motor current $P\sim I_{max}$, and the at least one temperature value T.

5. Motor control (100) according to one of the preceding claims 1 to 4 , wherein the maximum power value $P_{max}$ is a function $P_{max}(n_{soll}; T)$ of the at least one temperature value T and the target speed $n_{soll}$,

   and in particular the maximum motor current $I_{max}$ is a function $I_{max}(n_{soll}; T)$ of the at least one temperature value T and the setpoint speed $n_{soll}$.

6. Motor control (100) according to one of the preceding claims, wherein the control device (150) is set up, in particular programmed, so that the limitation of the power consumption of the electric motor (140), in particular a programmed current limitation, is superimposed on the regulation of the speed.

**7.** Motor control (100) according to one of the preceding claims, wherein the control device (150) is set up, in particular programmed, so that the limitation of the power consumption of the electric motor (140), in particular a programmed current limitation, is subordinate to the regulation of the speed.

**8.** Motor control (100) according to one of the preceding claims, wherein the control device (150) is set up, in particular programmed, to reduce the maximum power value in the event of an increase in the at least one temperature value under load during operation of the electric motor (140), as a result of which in particular the speed is also influenced.

**9.** Motor control (100) according to one of the preceding claims, wherein the control device (150) has an excess temperature cut-off which interrupts the power consumption of the electric motor (140) when the at least one temperature value reaches or exceeds a predetermined excess temperature value.

**10.** Power tool (1), in particular a hand-held power tool, with

an electric motor (140), in particular a brushless motor,
a drive shaft coupled to the electric motor (140) and an output shaft coupled to the drive shaft via a transmission device, to which a tool can be connected, and
a motor control (100) according to one of the preceding claims.

**11.** Power tool according to claim 10, which is configured as an angle grinder.

**12.** Method for controlling an, in particular brushless, electric motor (140) of a power tool (1), by means of the motor control (100) according to one of claims 1 to 9, comprising the steps of

Detecting of at least one temperature value (T) of a power tool component influenced by the operation of the electric motor (140);
Detecting of a power consumption value (P; I) characterizing the power consumption of the electric motor (140);
Setting the power consumption of the electric motor (140) to a maximum power value (Pmax);
Adjusting this maximum power value ($P_{max}$) as a function of the at least one temperature value (T).

**13.** A computer program, or storage medium comprising a computer program code comprising instructions which, when the computer program is executed by a computer, cause the computer to perform the steps of the method according to claim 12.

**Revendications**

**1.** Commande de moteur (100) pour un moteur électrique (140), en particulier sans balais, d'un outil électrique (1), en particulier d'un outil électrique portatif, présentant

un dispositif de détection de température (170), au moyen duquel au moins une valeur de température (T), influencée par le fonctionnement du moteur électrique (140), d'une composante d'outil électrique peut être déterminée,
un dispositif de mesure de puissance (160) qui est configuré pour enregistrer une valeur de puissance absorbée (P ; I) caractérisant la puissance absorbée du moteur électrique (140),
un dispositif de commande (150) électronique qui présente un dispositif de limitation de puissance (120) qui, en vue de la limitation de la puissance absorbée du moteur électrique (140), est configuré pour restreindre la puissance absorbée du moteur électrique (140) à une valeur de puissance maximale ($P_{max}$) admissible,
**caractérisée en ce que** le dispositif de limitation de puissance (120) est en outre configuré pour ajuster la valeur de puissance maximale ($P_{max}$) admissible pendant le fonctionnement du moteur électrique (140) en fonction de la au moins une valeur de température (T),
dans laquelle le dispositif de commande (150) est programmable et est programmé pour restreindre la puissance absorbée (P ; I) du moteur électrique (140) à la valeur de puissance maximale ($P_{max}$) admissible et pour ajuster cette valeur de puissance maximale ($P_{max}$) admissible pendant le fonctionnement du moteur électrique (140) en fonction de la au moins une valeur de température (T), et
dans laquelle le dispositif de commande (150) est programmable et est programmé pour abaisser la valeur de puissance maximale (50 ; $P_{max}$) admissible lorsque la température (70) augmente, en particulier de façon linéaire ou selon un tracé non linéaire, et pour accroître la valeur de puissance maximale admissible lorsque la vitesse de consigne (60, $n_{soll}$) augmente, en particulier de façon linéaire ou selon un tracé non linéaire.

**2.** Commande de moteur (100) selon la revendication 1, dans laquelle le dispositif de mesure de puissance (160) comprend un dispositif de mesure de courant (160) au moyen duquel un courant (I) absorbé par le moteur électrique (140) est saisi en tant que valeur de courant, et dans laquelle la valeur de puissance absorbée est une valeur de courant (I).

3. Commande de moteur (100) selon l'une des revendications précédentes, dans laquelle le dispositif de commande (150) présente une régulation de vitesse (110) qui est configurée, en particulier programmée, pour fixer, en particulier réguler, la vitesse (n) à régler du moteur électrique (140), en particulier en fonction d'une valeur de consigne $n_{soll}$, indépendamment du courant I, à condition que la valeur de puissance maximale $P_{max}$ ne soit pas dépassée, et/ou à condition que la au moins une valeur de température ne dépasse pas une température T.

4. Commande de moteur (100) selon l'une des revendications précédentes, dans laquelle le dispositif de commande (150) présente une régulation de vitesse (110) qui est configurée, en particulier programmée, pour réguler une vitesse n, dans laquelle la vitesse n dépend d'une vitesse de consigne $n_{soll}$ pouvant être prédéfinie par l'utilisateur, de la valeur de puissance maximale $P_{max}$, du courant de moteur maximal $P \sim I_{max}$ et de la au moins une valeur de température T, et la vitesse n est une fonction $n(n_{soll}; P_{max}; T; M; U)$ de la vitesse de consigne $n_{soll}$, de la valeur de puissance maximale $P_{max}$, du courant de moteur $P \sim I_{max}$ et de la au moins une valeur de température T.

5. Commande de moteur (100) selon l'une des revendications précédentes 1 à 4, dans laquelle la valeur de puissance maximale $P_{max}$ est une fonction $P_{max}(n_{soll}; T)$ de la au moins une valeur de température T et de la vitesse de consigne $n_{soll}$, et en particulier le courant de moteur maximal $I_{max}$ est une fonction $I_{max}(n_{soll}; T)$ de la au moins une valeur de température T et de la vitesse de consigne $n_{soll}$.

6. Commande de moteur (100) selon l'une des revendications précédentes, dans laquelle le dispositif de commande (150) est configuré, en particulier programmé, pour que la limitation de la puissance absorbée du moteur électrique (140), en particulier une limitation de courant programmée, soit sus-jacente à la régulation de la vitesse.

7. Commande de moteur (100) selon l'une des revendications précédentes, dans laquelle le dispositif de commande (150) est configuré, en particulier programmé, pour que la limitation de la puissance absorbée du moteur électrique (140), en particulier une limitation de courant programmée, soit sous-jacente à la régulation de la vitesse.

8. Commande de moteur (100) selon l'une des revendications précédentes, dans laquelle le dispositif de commande (150) est configuré, en particulier programmé, pour réduire la valeur de puissance maximale en cas d'accroissement de la au moins une valeur de température sous charge pendant le fonctionnement du moteur électrique (140), moyennant quoi la vitesse en particulier est également influencée.

9. Commande de moteur (100) selon l'une des revendications précédentes, dans laquelle le dispositif de commande (150) présente une coupure de surchauffe qui interrompt l'absorption de puissance du moteur électrique (140) lorsque la au moins une valeur de température atteint ou dépasse une valeur de surchauffe prédéfinie.

10. Outil électrique (1), en particulier outil électrique portatif, avec

un moteur électrique (140), en particulier sans balais,
un arbre d'entraînement couplé au moteur électrique (140) et un arbre de sortie couplé à l'arbre d'entraînement via un dispositif de transmission, l'outil pouvant être relié à l'arbre de sortie, et
une commande de moteur (100) selon l'une des revendications précédentes.

11. Outil électrique (1) selon la revendication 10, qui est configuré en tant que meuleuse d'angle.

12. Procédé de commande d'un moteur électrique (140), en particulier sans balais, d'un outil électrique (1), au moyen de la commande de moteur (100) selon l'une des revendications 1 à 9, présentant les étapes de

détection de la au moins une valeur de température (T), influencée par le fonctionnement du moteur électrique (140), d'une composante d'outil électrique ;
détection de la valeur de puissance absorbée (P ; I) caractérisant la puissance absorbée du moteur électrique (140) ;
Réglage de la puissance absorbée du moteur électrique (140) à une valeur de puissance maximale ($P_{max}$) admissible ;
**caractérisé en ce que** le procédé présente en outre l'étape de
ajustement de cette valeur de puissance maximale ($P_{max}$) en fonction de la au moins une valeur de température (T), la valeur de puissance maximale ($P_{max}$) étant abaissée lorsque la température augmente et étant accrue lorsque la vitesse de consigne ($n_{soll}$) est augmentée.

**13.** Programme informatique, ou support de stockage présentant un code de programme informatique, comprenant des instructions qui, lors de l'exécution du programme informatique par un ordinateur, amènent celui-ci à exécuter les étapes du procédé selon la revendication 12.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 3849076 A1
- DE 102016203728 A1
- JP 2002018745 A
- DE 102018123661 A1
- DE 102007014346 A1